# EUROPÄISCHE PATENTSCHRIFT

(11) **EP 0 802 078 B1**
(45) Veröffentlichungstag und Bekanntmachung des Hinweises auf die Patenterteilung: **31.05.2000**
(21) Anmeldenummer: 97104033.2
(22) Anmeldetag: 11.03.1997
(51) Int. Cl.: B60K 15/035, F16K 17/36

(54) **Be- und Entlüftungsventil für Kraftstofftank**
Venting and aeration valve for fuel
Clapet d'aération et de ventilation pour réservoir de carburant

(30) Priorität: 16.04.1996 DE 19614981
(43) Veröffentlichungstag der Anmeldung: 22.10.1997
(73) Patentinhaber: Motorenfabrik Hatz GmbH & Co. KG, 94099 Ruhstorf (DE)
(72) Erfinder: Kampichler, Günter, 94099 Ruhstorf, Rott (DE); Geier, Herbert, 94099 Ruhstorf, Rott (DE)
(74) Vertreter: Grättinger & Partner (GbR)

(56) Entgegenhaltungen:
- DE-A- 2 932 076
- DE-B- 1 024 019
- GB-A- 850 544
- US-A- 4 041 967
- US-A- 4 756 328

## Beschreibung

Die Erfindung betrifft ein Be- und Entlüftungsventil für einen Kraftstofftank gemäß dem Oberbegriff von Anspruch 1.

Zum Zweck der Entlüftung von Kraftstofftanks werden im allgemeinen in die Deckwand des Tanks eingesetzte Tankdeckel verwendet, welche mit zwei Ventilen versehen sind, nämlich einem Entlüftungsventil und einem Belüftungsventil, welche entsprechend auf einen Überdruck oder einen Unterdruck im Raum über der in den Tank eingefüllten Flüssigkeit reagieren. Zum Beispiel dient das Belüftungsventil bei einem Kraftstofftank dazu, die Ausbildung eines Vakuums im Kraftstofftank zu vermeiden, welches sich mit zunehmendem Kraftstoffverbrauch einstellen würde. Umgekehrt dient das Entlüftungsventil dem Ausgleich eines Überdrucks im Kraftstofftank, der sich z.B. einstellen würde, wenn sich das Kraftstoffvolumen bei Erwärmung ausdehnt. Infolge von Erschütterungen und Schräglagen des Tanks kommt es zum Austritt kleiner Kraftstoffmengen durch die beiden Ventile. Man erkennt dies daran, daß in der Regel derartige mit Be- und Entlüftungsventil versehene Tankdeckel infolge dieses Ausschwitzens des Tankinhalts verschmutzt sind.

Ein bekanntes gattungsgemäßes Ventil (GB 850544 A) ist an die Be- und Entlüftungsleitung angeschlossen, wobei das bewegliche Ventilelement, welches den Ventilsitz verschließt oder freigibt, an einem Pendelbolzen ausgebildet ist.

Dementsprechend besitzt der Pendelbolzen an seinem ventilseitigen Ende einen verbreiterten Pendelkopf, in dessen Zentrum ein vorspringender Kugelabschnitt ausgebildet ist, der den Ventilsitz öffnet oder verschließt. Die Betätigung des Ventils erfolgt dadurch, daß sich der Pendelkopf als Folge einer Auslenkung des Pendels einseitig gegen das Ventilgehäuse abstützt, so daß der Kugelabschnitt den Ventilsitz verschließt oder freigibt.

Ein derartiges Ventil ist zwar einfach herzustellen, da es auf jegliche Führungselemente im Sinne eines Kalottenlagers verzichtet; es reagiert aber nicht verzögerungsfrei, da der Kugelabschnitt den Ventilsitz erst nach einer entsprechenden seitlichen Verschiebung des Pendels findet. Wegen der damit verbundenen Reibung genügen kleinste Pendelausschläge noch nicht zur Herbeiführung des Ventilverschlusses, so daß mit kleinen Leckagen jederzeit zu rechnen ist.

Demgegenüber liegt der vorliegenden Erfindung die Aufgabe zugrunde, ein Tankventil der eingangs genannten Art zu schaffen, welches mit geringem Aufwand herzustellen ist und welches mit hoher Empfindlichkeit und praktisch verzögerungsfrei anspricht.

Ein derartiges Ventil umfaßt die Merkmale gemäß dem Kennzeichen von Anspruch 1.

Das bewegliche Ventilelement besteht hier aus zwei Teilen, nämlich einem Pendel und einer auf einem verbreiterten Pendelkopf lose rollbaren Kugel, welche auf diese Weise verzögerungsfrei den Ventilsitz findet bzw. freigibt, sobald sich das Pendel bewegt. Die Kugel reagiert bereits auf jede kleinste Pendelbewegung, da sie in Folge ihrer Punktberührung schon durch minimale Kräfte in Bewegung versetzt wird. Der Pendelbolzen bildet dabei die Pendelmasse, wobei die Pendelfläche, auf welche die Ventilkugel abrollt, durch die ventilseitige Oberfläche des verbreiterten Pendelkopfs gebildet ist. Begünstigt wird die Betätigung der Ventilkugel noch dadurch, daß die Pendelfläche des Pendelkopfs ballig ausgebildet ist.

Der Pendelbolzen ist mit seinem Schaftteil durch eine Öffnung des Ventilgehäuses hindurchgesteckt, wobei die Öffnung der Pendelbewegung entsprechend größer bemessen ist als der Schaftteil. Der Pendelbolzen ist also mit seinem Kopf unter der Ventilkugel lose in die Öffnung des Ventilgehäuses eingehängt, so daß er dort frei und richtungsunabhängig pendeln kann.

Zweckmäßigerweise verläuft die Entlüftungsbohrung etwa senkrecht zur Achse der Mittelstellung des Pendelbolzens, welcher mit einem derartigen Abstand von der benachbarten Seitenwand des Tanks angeordnet ist, daß seine Pendelbewegung nicht behindert wird.

An der erfindungsgemäßen Lösung ist besonders vorteilhaft, daß das Be- und Entlüftungsventil unabhängig von der Einfüllöffnung des Tanks überall in dessen Seitenwand oberhalb des Flüssigkeitsspiegels angebracht werden kann.

Durch die noch vorgesehene Variante, daß der den Ventilsitz für den Ventilkörper bildende Hohlraum mit einer weiteren Entlüftungsbohrung verbunden ist, welche etwa in der Verlängerung der Mittellage des Pendelbolzens verläuft, besteht sogar die Möglichkeit, das erfindungsgemäße Be- und Entlüftungsventil wahlweise in eine Öffnung in der Deckwand des Tanks einzusetzen. Es versteht sich von selbst, daß bei einem Ventilgehäuse mit zwei Entlüftungsbohrungen die jeweils nicht angeschlossene Entlüftungsbohrung durch einen Deckel verschlossen ist, um einen Austritt von Flüssigkeit hinter dem Ventilkörper zu verhindern.

Der Pendelwinkel des Pendelbolzens ist so zu wählen, daß die Pendelbewegung ausreicht, um die Ventilkugel weit genug, nämlich bis zum Erreichen ihrer Abschlußposition im Ventilsitz anzuheben. Diese Hubbewegung, die letztlich durch die Schräglage des Pendelkopfs erreicht wird, kann auch noch durch eine entsprechende Dimensionierung des Pendelkopfs selbst beeinflußt werden. Dementsprechend erreicht die Ventilkugel die geometrische Dichtposition nicht nur bei seitlichen Stößen auf den Tank, die zu kurzzeitigen Erschütterungen führen, sondern auch bei extremen Schräglagen des Tanks bzw. wenn der Tank vollständig zur Seite kippt. Allerdings wird beim Betrieb des Motors durch dessen Vibrationen das Pendel ständig in Unruhe versetzt, so daß bei Schräglagen bis ca. 40° die vom Pendelbolzen betätigte Ventilkugel die Be- und Entlüftungsbohrung immer wieder freimacht. Der Betrieb des Motors ist dabei ungestört gewährleistet. Bei größeren, d.h. das zulässige Maß überschreitenden Schräglagen hingegen bleibt das Ventil ständig geschlossen mit der Folge, daß der Motor aus Kraftstoffmangel abstirbt. Anders ist es, wenn ein motorbetriebenes Gerät, z.B. ein Stampfer, bei stehendem Motor umfällt; hier schließt das Ventil bereits bei Schräglagen ab etwa 15°, da ohne die Vibrationen des Motors das Ventil geschlossen bleibt, nachdem der Pendelbolzen, den Gesetzen der Schwerkraft folgend, die Ventilkugel in die Schließstellung bewegt hat. Die Gefahr einer reichkontaminierung mit Dieselkraftstoff ist damit beseitigt.

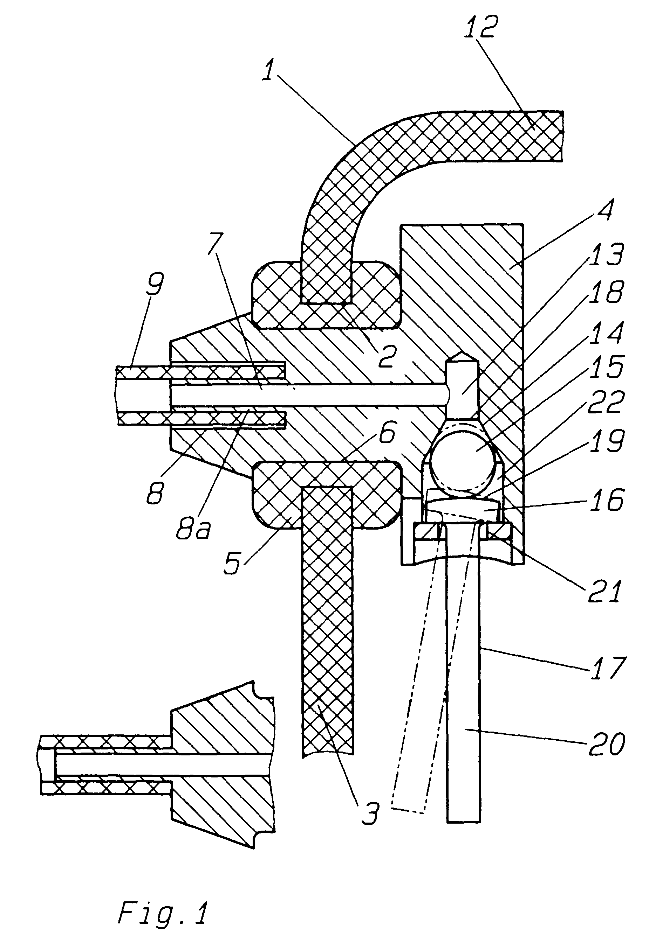

Im folgenden wird ein Ausführungsbeispiel der Erfindung anhand der Zeichnung erläutert. Es zeigt
- Fig. 1: ein Tankventil im Schnitt, in einer ersten Ausführungsform und
- Fig. 2: ein Tankventil im Schnitt, in einer zweiten Ausführungsform.

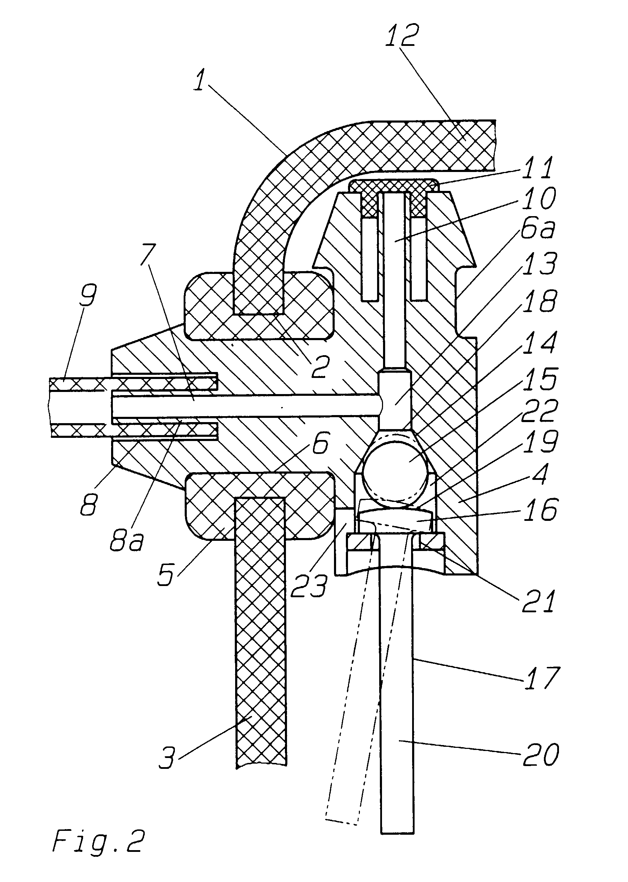

Von einem Kunststofftank 1 ist lediglich ein Ausschnitt in einem oberen Eckbereich dargestellt. Ein als Be- und Entlüftungsventil ausgebildetes Tankventil ist in eine Wandöffnung 2 der Seitenwand 3 des Tankes 1 nahe dessen Eckbereich eingesetzt. Ein Ventilgehäuse 4 ist mittels einer Ringdichtung 5 in Art einer Gummitülle, die in einer Ringnut 6 des Ventilgehäuses 4 aufgenommen ist, innerhalb der Wandöffnung 2 abgedichtet. Im Zentrum der Ringnut 6 des Ventilgehäuses 4 verläuft eine erste Entlüftungsbohrung 7, in deren Mündungsbereich eine konzentrische Anschlußbohrung 8, welche einen Anschlußzapfen 8a zum Aufstecken eines zum Auslaßkanal des Abgastrakts führenden Entlüftungsschlauchs 9 bildet, vorgesehen ist. In der Variante gemäß Fig. 2 besitzt das Ventilgehäuse 4 eine zweite Entlüftungsbohrung 10, die jedoch mit einem Deckel 11 verschlossen ist. Der Deckel 11 ist sinnvoll, weil dadurch ein Auslaufen des Tankinhalts auch dann vermieden wird, wenn der Tank umkippt. Die zweite Entlüftungsbohrung 10 kann alternativ zur ersten Entlüftungsbohrung 7 genutzt werden, nämlich dann, wenn das Ventilgehäuse 4 im Bereich der Deckwand 12 des Tanks 1 angeschlossen werden soll. In diesem Fall wird der Deckel 11 umgesetzt auf die Mündung der ersten Entlüftungsbohrung 7 und die Gummitülle 5 auf die Ringnut 6a, welche die zweite Entlüftungsbohrung 10 umgibt. Die bzw. beide Entlüftungsbohrungen 7, 10 münden in einen Hohlraum 13 mit einem konischen Sitz 14 für eine Ventilkugel 15, welche auf einem Pendelkopf 16 eines Pendelbolzens 17 aufliegt. Entsprechend der Pendelbewegung des Pendelbolzens 17 wird die Ventilkugel 15, wie für einen linken Ausschlag des Pendelbolzens 17 strichpunktiert dargestellt, angehoben, so daß sie die Austrittsöffnung 18 des Sitzes 14 verschließt. Ein sanftes Anheben der Ventilkugel 15 wird dadurch sichergestellt, daß die Pendelfläche 19 des Pendelkopfes 16, auf welcher die Ventilkugel 15 aufliegt, ballig ausgebildet ist. Ausschläge des Pendelbolzens 17 entsprechen mehr oder weniger starken Schräglagen des Kraftstofftanks 1, welche bei Erreichen eines Mindestausschlags zu einem Verschließen des Be- und Entlüftungsventils führen. Wird der Mindestausschlag nicht erreicht oder nimmt der Pendelbolzen seine Mittelposition ein, so ist das Ventil offen, d.h. es ist für die erforderliche Tankbe- oder -entlüftung gesorgt.

Der Pendelbolzen 17 weist einen Schaftteil 20 auf, der durch eine Öffnung 21 des Ventilgehäuses 4 hindurchgesteckt ist, welche kleiner ist als der in der Draufsicht bevorzugt runde Pendelkopf 16, welche aber groß genug ist, um die erforderliche Pendelbewegung des Pendelbolzens 17 zwischen Anschlägen zuzulassen.

Eine seitliche, mit dem Ventilraum 22 oberhalb des Pendelkopfs 16 verbundene Bypassöffnung 23 sorgt für eine ständige Be- und Entlüftungsmöglichkeit, solange die Ventilkugel 15 den Ventilsitz 14 freigibt, und zwar auch dann, wenn der Pendelbolzen 17 mit seinem Kopf 16 die Öffnung 21 im Ventilgehäuse verschließt.

## Patentansprüche

1. Be- und Entlüftungsventil für einen Kraftstofftank, mit den Merkmalen,
1.1 daß es einen in Ausströmrichtung gegen einen Ventilsitz (14) in einem Ventilgehäuse (4) mittels einer als Pendelbolzen (17) ausgebildeten Pendelmasse betätigbaren Ventilkörper aufweist, welcher als Ventilkugel (15) ausgebildet ist,
1.2 daß das Ventilgehäuse (4) dichtend in eine Wandöffnung (2) des Kraftstofftanks (1) eingesetzt ist und eine Entlüftungsbohrung (7) aufweist, welche zur Innenseite des Tanks (1) hin mit dem Ventilsitz (14) verbunden ist,
1.3 daß die Ventilkugel (15) der Stirnseite eines einen Schaftteil (20) des Pendelbolzens (17) verbreiternden Pendelkopfs (16) zugeordnet ist, und
1.4 daß der Pendelbolzen (17) mit seinem Schaftteil (20) durch eine Öffnung (21) des Ventilgehäuses (4) hindurchgesteckt ist, wobei die Öffnung (21) einerseits der Pendelbewegung entsprechend größer bemessen ist als der Schaftteil (20) und andererseits vom Pendelkopf (16) verschließbar ist, wenn der Pendelbolzen (17) seine Mittelstellung einnimmt,
dadurch gekennzeichnet,
1.5 daß die Ventilkugel (15) auf einer Pendelfläche (19) lose rollend aufliegt, die durch die der Ventilkugel (15) zugeordnete Stirnseite des Pendelkopfes (16) gebildet ist.

2. Be- und'Entlüftungsventil nach Anspruch 1,
dadurch gekennzeichnet,
daß die Pendelfläche (19) des Pendelkopfs (16) ballig ausgebildet ist.

3. Be- und Entlüftungsventil nach Anspruch 1,
dadurch gekennzeichnet,
daß der den Ventilsitz (14) für den Ventilkörper bildende Hohlraum mit einer weiteren Entlüftungsbohrung (10) verbunden ist, welche etwa in der Verlängerung der Mittellage des Pendelbolzens (17) verläuft.

4. Be- und Entlüftungsventil nach Anspruch 3,
dadurch gekennzeichnet,
daß das Ventilgehäuse (4) um jede Entlüftungsbohrung (7, 10) herum einen Sitz in Art einer Ringnut (6, 6a) zur Aufnahme einer Ringdichtung (5) aufweist für den wahlweisen dichtenden Anschluß des Ventilgehäuses (4) an eine Wandöffnung (2).

5. Be- und Entlüftungsventil nach Anspruch 4,
dadurch gekennzeichnet,
daß die beiden Entlüftungsbohrungen (7, 10) miteinander einen Winkel von etwa 90° einschließen.

## Claims

1. A vent valve for a fuel tank, characterised in that
1.1. it provides a valve body, moveably arranged in flow direction against a valve seat (14) inside a valve housing (4) using a pendulum in the shape of a pendulum bolt (17), which takes the form of a valve ball (15);
1.2. the valve body (4) is sealingly positioned into an opening (2) of the fuel tank wall (1) and provides a venting port (7), which on the inside of the tank (1) is connected with the valve seat (14);
1.3. the valve ball (15) is associated with the face of the pendulum head (16), which expands a shaft portion (20) of the pendulum bolt (17);
1.4. the pendulum bolt (17) and its shaft portion (20) extend through an opening (21) in the valve body (4), whereby the opening (21) is on one side, corresponding to the pendulum movement, larger than the shaft portion (20) and on the other side can be closed by the pendulum head (16), when the pendulum bolt (17) reaches its central position, characterised in that
1.5. the valve ball (17) can freely roll on a pendulum surface (19) which is formed by the face of the pendulum head (16) associated with the valve ball (15).

2. Vent valve according to claim 1, characterised in that the pendulum surface (19) of the pendulum head (16) is shaped like a ball.

3. Vent valve according to claim 1, characterised in that the cavity, forming the valve seat (14) for the valve body is connected with a further venting port (10), which extends approximately over the length of the extension of the central position of the pendulum bolt (17).

4. Vent valve according to claim 3, characterised in that the valve housing (4) provides a seat designed like a circular nut (6, 6a) around each venting port (7, 10) to accept a circular seal (5) for a selectively sealing connection of the valve housing (4) at the wall opening (2).

5. Vent valve according to claim 4, characterised in that both venting ports (7, 10) together form an angle of approx. 90°.

## Revendications

1. Vanne d'aération et de purge d'air pour une citerne de combustible, avec pour caractéristiques
1.1 qu'elle présente un corps de vanne conçu sous forme de boule (14) et actionnable dans un boîtier de vanne (4) dans le sens de l'écoulement de sortie à l'encontre d'un siège de vanne, à l'intervention d'une masse oscillante conçue sous forme d'axe d'oscillation,
1.2 que le boîtier de vanne (4) est inséré avec étanchéité dans un orifice (2) pratiqué dans la paroi de la citerne à combustible (1) et présente un orifice de purge d'air (7) qui est en liaison avec le siège de vanne (14) dans la direction de la face intérieure de la citerne (1),
1.3 que la boule de vanne (15) est associée à la face frontale d'une tête oscillante (16) élargissant une partie tige (20) de l'axe d'oscillation (17), et
1.4 que l'axe d'oscillation (17) est enfoncé avec sa partie tige (20) au travers d'un orifice (21) du boîtier de vanne (4), l'orifice (21) étant d'une part d'un plus gros calibre que la partie tige (20), pour permettre le mouvement oscillant, et pouvant d'autre part être refermé par la tête oscillante (16) lorsque l'axe d'oscillation (17) occupe sa position médiane,
caractérisée en ce que :
1.5 la boule (15) repose en tournant fou sur une surface d'oscillation (19) qui est constituée par la face frontale de la tête oscillante (16) correspondant à la boule (15).

2. Vanne d'aération et de purge d'air selon la revendication 1, caractérisée en ce que la surface d'oscillation (19) de la tête oscillante (16) est conçue sous forme de bombé.

3. Vanne d'aération et de purge d'air selon la revendication 1, caractérisée en ce que le creux formant le siège de vanne (14) pour le corps de vanne est en liaison avec un autre orifice de purge d'air (10) qui se situe à peu près dans le prolongement de la position médiane de l'axe d'oscillation (17).

4. Vanne d'aération et de purge d'air selon la revendication 3, caractérisée en ce que le boîtier de vanne (4) présente, autour de chaque orifice de purge (7, 10), un siège prenant la forme d'une rainure annulaire (6, 6a) réceptionnant un joint d'étanchéité annulaire (5) en vue d'un raccordement étanche optionnel du boîtier de vanne (4) à un orifice de paroi (2).

5. Vanne d'aération et de purge d'air selon la revendication 4, caractérisée en ce que les deux orifices de purge (7, 10) décrivent un angle d'environ 90° entre eux.
